**Europäisches Patentamt**

**European Patent Office**

**Office européen des brevets**

(19)

(11) Veröffentlichungsnummer: **0 118 063**
**B1**

## (12) EUROPÄISCHE PATENTSCHRIFT

(45) Veröffentlichungstag der Patentschrift:
**22.04.87**

(51) Int. Cl.⁴: **G 01 N 31/22**

(21) Anmeldenummer: **84101636.3**

(22) Anmeldetag: **17.02.84**

(54) **Reagenz zum Nachweis von Peroxiden.**

(30) Priorität: **05.03.83 DE 3307907**

(43) Veröffentlichungstag der Anmeldung:
**12.09.84 Patentblatt 84/37**

(45) Bekanntmachung des Hinweises auf die Patenterteilung:
**22.04.87 Patentblatt 87/17**

(84) Benannte Vertragsstaaten:
**BE CH DE FR GB IT LI NL**

(56) Entgegenhaltungen:
**DANIEL SWERN "Organic Peroxides", Vol. II, 1971
WILEY-INTERSCIENCE, New York
ORGANIKUM, 7. Auflage, 1967 VEB DEUTSCHER
VERLAG DER WISSENSCHAFTEN, Berlin**

(73) Patentinhaber: **Merck Patent Gesellschaft mit
beschränkter Haftung, Frankfurter Strasse 250,
D-6100 Darmstadt (DE)**

(72) Erfinder: **Werner, Wolfgang, Dr., Killingstrasse 53,
D-4400 Münster (DE)**

**Beschreibung**

Die Erfindung betrifft ein neues Reagenz auf Basis von Titan-(IV)-Verbindungen sowie ein Verfahren für den Nachweis von Peroxiden sowohl in wässeriger als auch in organischer Lösung.

Reagenzien und Verfahren zum qualitativen oder quantitativen Nachweis von Peroxiden in wässerigen Lösungen sind bekannt. Üblich sind beispielsweise iodometrische Bestimmungen mit Hilfe saurer Lösungen von Kaliumiodid, Nachweise mit dem unter der Bezeichnung Jorissen-Reagenz bekannten Vanadium-Schwefelsäure-Reagenz, dem Titan-Schwefelsäure-Reagenz und dem Titantetrachlorid-Salzsäure-Reagenz. Diese gängigen Reagenzien eignen sich im allgemeinen für den Nachweis von Wasserstoffperoxid oder anorganischen Peroxiden, die im wässerigen Medium löslich sind und unter den Reaktionsbedingungen Wasserstoffperoxid freisetzen.

Es besteht jedoch ein grosses Bedürfnis für ein Reagenz bzw. Nachweisverfahren für Peroxide in organischen Lösungen. Von besonderer Wichtigkeit sind Peroxide, die unkontrolliert durch Autoxidation in organischen Lösungsmitteln entstehen. Von ausgesprochener Gefährlichkeit und Tücke sind hierbei Hydroperoxide und polymere Peroxide, die sich in Ethern, wie beispielsweise Diethylether, Di-isopropylether, Tetrahydrofuran, Dioxan, bilden. Diese Peroxide reichern sich auch aus geringsten Konzentrationen bei der Destillation dieser Lösungsmittel im Destillationsrückstand an und können zu schweren Explosionen führen. Schon aus Gründen der Arbeitssicherheit ist es geboten, ein Reagenz zum exakten qualitativen wie quantitativen Nachweis dieser Peroxide an der Hand zu haben. Darüberhinaus ist es wünschenswert, auch andere organische Peroxid-Verbindungen, wie Hydro- und Diperoxide, Persäuren, Perester und ähnliche Per-Verbindungen, nachweisen zu können.

Die bekannten Reagenzien zum Nachweis von Peroxiden in wässeriger Lösung sind allerdings nicht oder nur in einzelnen Ausnahmefällen für den Nachweis in organischen Lösungen geeignet. Zum einen haben die meisten gängigen Reagenzien den Nachteil, dass ihre Reaktion mit Peroxiden nicht spezifisch ist und dass insbesondere polymere Peroxide nicht erfasst werden. Auch weisen sie häufig eine Empfindlichkeit gegen Luftsauerstoff und teils auch gegen Licht auf, somit also eine nicht unerhebliche Störanfälligkeit. Beim Nachweis von Peroxiden in organischen Lösungen tritt zum anderen das Problem hinzu, dass diese Reagenzien mit den meisten organischen Lösungsmitteln nicht mischbar sind und sich zwei getrennte Phasen ausbilden. Darüberhinaus können Zersetzungsreaktionen mit den Lösungsmitteln, teils unter Bildung störend gefärbter Zersetzungsprodukte, auftreten.

Quantitative photometrische Methoden gelten allgemein zwar als sehr empfindlich; bei photometrischen Peroxidbestimmungen mit den bekannten Reagenzien muss aber aufgrund der Nichtmischbarkeit eine Phasentrennung vorgeschaltet werden, was solche Verfahren arbeitsaufwendig gestaltet und weitere Fehlerquellen einbringt. In der Literatur (s. z.B. R.M. Johnson und J.W. Siddiqui: «The Determination of Organic Peroxides», Oxford, 1970) werden aufgrund der geschilderten Nachteile solche Verfahren als wenig präzise und unzuverlässig beurteilt. Von der Verwendung von Reagenzien auf Basis von Titan-(IV)-Verbindungen, die die charakteristische Gelb-Orange-Färbung des sich mit Wasserstoffperoxid bildenden Peroxotitanylkations ausnutzen und die gegen Luftsauerstoff weniger empfindlich sind, wird beim Nachweis von organischen Peroxiden ausdrücklich abgeraten (R.D. Mair und R.T. Hall: «Determination of Organic Peroxides by Physical, Chemical and Colorimetric Methods» in D. Swern: «Organic Peroxides», Vol. II, New York, 1971).

Ein allgemein anwendbares Reagenz und Verfahren, das für den Nachweis von Peroxiden sowohl in wässeriger als auch in organischer Lösung gleichermassen geeignet ist, ist bisher nicht bekannt.

Es bestand somit die Aufgabe, ein Reagenz und ein Verfahren bereitzustellen, das einen qualitativen wie quantitativen Nachweis von Peroxiden sowohl in wässeriger als auch in organischer Lösung ermöglicht, und das darüberhinaus exakt und gegenüber Störungen unempfindlich ist.

Diese Aufgabe wurde durch die vorliegende Erfindung gelöst.

Überraschenderweise wurde gefunden, dass ein Reagenz auf Basis von Titan-(IV)-Verbindungen, das in einem niederen aliphatischen Alkohol mit 1–5 C-Atomen eine Verbindung $TiX_4$, in der X = Cl oder OR mit R = Alkyl mit 1–5 C-Atomen ist, und gegebenenfalls einen Zusatz an Säure gelöst enthält, sich in hervorragender Weise zum Nachweis von Peroxiden sowohl in wässeriger als auch in organischer Lösung eignet, wobei es mit der Probelösung zu einer homogenen Phase mischbar ist.

Gegenstand der Erfindung ist somit ein Reagenz auf Basis von Ti-(IV)-Verbindungen zum Nachweis von Peroxiden sowohl in wässeriger als auch in organischer Lösung, das neben einem niederen aliphatischen Alkohol mit 1–5 C-Atomen eine Verbindung $TiX_4$ enthält, in der X = Cl oder OR mit R = Alkyl mit 1–5 C-Atomen ist, wobei das Reagenz mit der Probelösung zu einer homogenen Phase mischbar ist, sowie ein solches Reagenz, das, bezogen auf dessen Gesamtmenge, bis zu 35 Gew.-% einer Säure enthält, die einen $pK_s$-Wert von nicht mehr als 5 aufweist.

Gegenstand der Erfindung ist weiterhin die Verwendung dieser Reagenzien zum Nachweis von Peroxiden in wässeriger und in organischer Lösung.

Gegenstand der Erfindung ist darüber hinaus ein Verfahren zum Nachweis von Peroxiden sowohl in wässeriger als auch in organischer Lösung, wobei die auf Peroxide zu prüfende Probe mit einem Reagenz auf Basis von Ti-(IV)-Verbindungen versetzt und die bei Anwesenheit von Peroxiden auftretende Färbung zur qualitativen bzw. quantitativen Bestimmung herangezogen wird. Dabei wird die Probe mit einem Reagenz versetzt, das neben einem niederen aliphatischen Alkohol mit 1–5 C-Atomen eine Verbindung $TiX_4$ enthält, in der X = Cl oder OR mit R = Alkyl mit 1–5 C-Atomen ist, wobei sich das Reagenz mit der Probe zu einer homogenen Phase mischen lässt. Vorzugsweise wird bei einem solchen Verfahren ein Reagenz zugefügt, das, bezogen auf dessen Gesamtmenge, bis zu 35 Gew.-% einer Säure enthält, die einen $pK_s$-Wert von nicht mehr als 5 aufweist.

Das erfindungsgemässe Reagenz enthält als aktive Substanz eine Verbindung $TiX_4$, in der X = Cl oder OR mit R = Alkyl mit 1–5 C-Atomen ist. Dies kann sein Titantetrachlorid oder ein Tetraalkylorthotitanat, wie beispielsweise Tetramethyl-, -ethyl-, -n- oder -i-propyl-, -n-, -i-, -t-butyl- oder -n-pentylorthotitanat. Bevorzugt sind die Verbindungen Titantetrachlorid, Tetraethylorthotitanat, Tetra-n-propyl-orthotitanat und Tetra-i-propyl-orthotitanat.

Diese Titanverbindungen sind in wässerigen und in organischen Medien löslich und haben die Aufgabe, unter den Nachweisbedingungen gelöstes $Ti^{4+}$ bereitzustellen, um mit Peroxiden das charakteristisch gefärbte Peroxotitanylkation zu bilden, das dem Nachweis dient.

Das erfindungsgemässe Reagenz enthält als Lösungsmittel niedere aliphatische Alkohole mit 1–5 C-Atomen. Diese können beispielsweise sein: Methanol, Ethanol, n- oder Isopropanol, n-Butanol, n-Pentanol oder Isoamylalkohol. Bevorzugt sind Methanol, Ethanol, n- und Isopropanol.

Das Mengenverhältnis von Titanverbindung zu Lösungsmittel ist im erfindungsgemässen Reagenz weitgehend unkritisch. Als günstig haben sich Lösungen erwiesen, die bis zu etwa 10 Gew.-% an Titanverbindung enthalten. Der Fachmann kann aber auch Lösungen anderer mengenmässiger Zusammensetzung wählen, die er im gegebenen Fall durch einfaches Ausprobieren leicht optimieren kann.

Das erfindungsgemässe Reagenz kann einen Zusatz einer Säure enthalten, die einen $pK_s$-Wert von nicht mehr als 5 aufweist. Dies ist dann erforderlich, wenn Peroxide nachgewiesen werden sollen, die nur im sauren Medium Wasserstoffperoxid bilden.

Enthält das Reagenz Titantetrachlorid, so ist nur ein geringer oder kein Säurezusatz erforderlich, da im Reagenz durch Alkoholyse dieser Verbindung Salzsäure entsteht. In den anderen Fällen kann der Säurezusatz bis zu 35 Gew.-%, bezogen auf die Gesamtmenge des Reagenzes, betragen.

Die Art der zugesetzten Säure ist ebenfalls weitgehend unkritisch. Mit Ausnahme von Phosphorsäure und Flusssäure, die durch Reaktion mit der Titanverbindung den Nachweis beeinträchtigen, kommen praktisch alle anorganischen und organischen Säuren in Betracht, die einen $pK_s$-Wert von nicht mehr als 5 aufweisen. Diese können beispielsweise sein: Salzsäure, Schwefelsäure, Perchlorsäure, Ameisensäure, Essigsäure, Trichloressigsäure, Trifluoressigsäure, Oxalsäure, Methansulfonsäure, p-Toluolsulfonsäure. Bevorzugt sind Schwefelsäure, Perchlorsäure und p-Toluolsulfonsäure. Der Fachmann kann aber auch hier bezüglich Art und Menge der zugesetzten Säure die für den gegebenen Fall optimale Zusammensetzung durch einfaches Ausprobieren ermitteln.

Die Herstellung des erfindungsgemässen Reagenzes ist völlig problemlos und wesentlich einfacher als die Bereitung des gemäss dem Stand der Technik üblicherweise verwendeten Titan-Schwefelsäure-Reagenzes (R. Criegee in Houben-Weyl, Bd. II, S.568–574, Stuttgart, 1953). Sie erfolgt durch einfaches Mischen oder Lösen der Titanverbindungen und gegebenenfalls der Säure in einem der genannten Alkohole.

Bei sachgemässer Behandlung und Lagerung sind die erfindungsgemässen Reagenzien aufgrund ihrer völligen oder weitgehenden Unempfindlichkeit gegenüber Luft- und Temperatureinflüssen über beliebig lange Zeit hinweg stabil und einsatzfähig.

Das erfindungsgemässe Verfahren zum Nachweis von Peroxiden in wässeriger und in organischer Lösung erfolgt so, dass man eine Probe von wenigen Millilitern der auf Peroxide zu untersuchenden Lösung mit etwa 1–2 ml des erfindungsgemässen Reagenzes versetzt, wobei sich diese Mischung sowohl im Falle von wässerigen als auch von organischen Probelösungen zu einer homogenen Phase mischen lässt. In einzelnen Fällen kann es erforderlich sein, zur Erreichung einer völlig homogenen Phase noch eine geringe Menge eines der genannten Alkohole zuzusetzen.

Die bei Anwesenheit von Peroxiden auftretende Färbung dient als qualitativer Nachweis.

Dieser kann zum halbquantitativen Nachweis erweitert werden, etwa durch Vergleich der erhaltenen Farbintensität mit der von standardisierten Vergleichslösungen, die man sich herstellen kann durch Umsetzung des Reagenzes mit wässerigen Lösungen von Wasserstoffperoxid, die beispielsweise 25, 50, 100, 250, 500 etc. mg $H_2O_2$/l enthalten. Solche Vergleichslösungen sind über einige Tage hinweg haltbar.

Eine exakte quantitative Bestimmung des Peroxidgehaltes der Probelösung kann erfolgen durch photometrische Messung und Bestimmung der molaren Extinktion. Aufgrund der unterschiedlichen Reaktivität der verschiedenen Peroxide lässt sich die quantitative Aussage günstigerweise mit Hilfe einer Eichkurve ermitteln, die bei Einhaltung konstanter Reaktions- und Messbedingungen mit standardisierten Probelösungen erhalten werden kann. Hierbei ist es nicht unbedingt erforderlich, dass die Reaktion zwischen dem Peroxid in der Messprobe und dem Reagenz quantitativ abgelaufen ist, da unter den standardisierten Messbedingungen der abreagierende Anteil des Peroxidgehaltes immer die gleiche Farbintensität liefert.

Mit dem erfindungsgemässen Verfahren lassen sich alle anorganischen und organischen Peroxide, die unter den Prüfbedingungen Wasserstoffperoxid freisetzen, sowohl in wässeriger als auch in organischer Lösung nachweisen. Anorganische Peroxide können beispielsweise sein: freies Wasserstoffperoxid, Metallperoxide und anorganische Persäuren bzw. deren Salze. Organische Peroxide sind z.B. primäre, sekundäre und polymere Etherperoxide, wie sie als explosive Autoxidationsprodukte in praktisch allen als Lösungsmittel gebräuchlichen Ethern entstehen oder vorhanden sind, weiterhin aliphatische und aromatische Hydro- und Diperoxide, Persäuren, deren Salze und Ester. Gerade der einfache und sichere Nachweis der ungemein gefährlichen Etherperoxide macht dieses Verfahren so wertvoll für die Praxis.

Das erfindungsgemässe Verfahren ist bei sachgemässer Durchführung sicher, genau und weitgehend unempfindlich gegenüber möglichen Störungen. Es ist im Prinzip nur darauf zu achten, dass die Probelösungen keine störende Eigenfärbung aufweisen oder durch Reaktionen mit Ingredienzien des Reagenzes keine störend gefärbten Nebenprodukte liefern. Letzteres lässt sich jedoch leicht durch Blindversuche feststellen.

Störend auf den Nachweis kann sich unter Umständen eine höhere Konzentration an Chloridionen in der Probelösung auswirken, da dies zu gelblich gefärbten Titan-(IV)-chloro-Komplexen führt.

Die Anwesenheit von Kupfer-(II)- und Chloridionen führt zu gelb bis gelborange gefärbten Kupfer-(II)-chloro-Komplexen. Dies ist der Fall, wenn Ether vorher zur Entfernung von Peroxiden gemäss dem Verfahren aus der DE-PS 3 046 148 mit Kupfer-(II)-chlorid und Kupferpulver behandelt wurden. Diese mögliche Störquelle lässt sich problemlos durch ein kurzes Behandeln der Probelösung mit einer geringen Menge eines handelsüblichen basischen Ionenaustauschers eliminieren.

Das erfindungsgemässe Reagenz bzw. Verfahren ermöglicht somit einen sicheren, qualitativen wie quantitativen Nachweis beliebiger Peroxidverbindungen sowohl in wässeriger als auch in organischer Lösung. Die nachfolgenden Beispiele dienen der Erläuterung.

Beispiel 1

1 ml TiCl$_4$ wird in 60 ml Methanol gelöst und mit Methanol auf 100 ml aufgefüllt.

1 ml Lösung ergibt mit einem Tropfen einer 0,3%igen Lösung von Wasserstoffperoxid eine kräftig gelborange homogene Lösung.

Beispiel 2

1 ml TiCl$_4$ wird in 60 ml Isoamylalkohol gelöst, mit 10 ml konzentrierter Schwefelsäure versetzt und mit Isoamylalkohol auf 100 ml aufgefüllt.

2 ml dieser Lösung ergeben mit 0,2 ml einer Lösung von Diethyletherhydroperoxid in Diethylether eine homogene gelb gefärbte Lösung.

Beispiel 3

1 g Ti(OC$_2$H$_5$)$_4$ wird in ca. 60 ml Ethanol gelöst, mit 10 ml konzentrierter Schwefelsäure versetzt und mit Ethanol auf 100 ml aufgefüllt.

Beispiel 4

Wie Beispiel 3, jedoch mit 10 ml Ameisensäure.

Beispiel 5

Wie Beispiel 3, jedoch mit 10 ml Essigsäure.

Beispiel 6

Wie Beispiel 3, jedoch mit 10 ml Trichloressigsäure.

Beispiel 7

Wie Beispiel 3, jedoch mit 10 ml Trifluoressigsäure.

Beispiel 8

Wie Beispiel 3, jedoch mit 10 g Oxalsäure.

Beispiel 9

Wie Beispiel 3, jedoch mit 10 ml Methansulfonsäure.

Beispiel 10

Wie Beispiel 3, jedoch mit 10 g p-Toluolsulfonsäure.

Jeweils 2 ml dieser Lösungen ergeben mit 0,2 ml wässeriger Lösung von Wasserstoffperoxid oder etherischer Lösung von Hydroperoxiden oder Triacetontriperoxid gelb bis gelborange gefärbte homogene Lösungen.

Beispiel 11

1 g Ti(OC$_2$H$_5$)$_4$ wird in einem Gemisch aus ca. 70 ml Methanol und 12 ml konzentrierter Schwefelsäure gelöst und mit Methanol auf 100 ml aufgefüllt.

1 ml dieser Lösung entwickelt mit 2 ml einer Lösung von 200 mg Triacetontriperoxid in 1 l Diethylether eine homogene gelbgefärbte Lösung, deren Peroxidgehalt photometrisch mit Licht der Wellenlänge 415 nm bestimmt wird.

Beispiel 12

1 g Ti(O-i-C$_3$H$_7$)$_4$ wird mit 50 ml Isopropanol gelöst, mit 12 ml konzentrierter Schwefelsäure versetzt und mit Isopropanol auf 100 ml aufgefüllt.

1 ml dieser Lösung wird mit 2 ml handelsüblichem peroxidhaltigen Diethylether versetzt, wobei sich eine homogene gelbgefärbte Lösung bildet, deren Peroxidgehalt halbquantitativ oder quantitativ durch photometrische Messung bestimmt wird.

Beispiel 13

1 ml einer Lösung nach Beispiel 3 wird mit 1 ml Methanol und 2 ml handelsüblichem peroxidhaltigen Di-isopropylether vermischt. Es bildet sich eine homogene gelborange Lösung, deren Peroxidgehalt durch photometrische Messung bestimmt wird.

Beispiel 14

1 ml einer Lösung nach Beispiel 3 wird mit 2 ml Methanol und 2 ml handelsüblichem peroxidhaltigen Di-n-Butylether vermischt. Es entsteht eine homogene gelborange Lösung, deren Peroxidgehalt durch Vergleich mit standardisierten Probelösungen halbquantitativ abgeschätzt oder durch photometrische Messung exakt bestimmt wird.

**Patentansprüche**

1. Reagenz auf Basis von Ti-(IV)-Verbindungen zum Nachweis von Peroxiden sowohl in wässeriger als auch in organischer Lösung, dadurch gekennzeichnet, dass es neben einem niederen aliphatischen Alkohol mit 1–5 C-Atomen eine Verbindung $TiX_4$ enthält, in der X = Cl oder OR mit R = Alkyl mit 1–5 C-Atomen ist, wobei das Reagenz mit der Probelösung zu einer homogenen Phase mischbar ist.

2. Reagenz nach Anspruch 1, dadurch gekennzeichnet, dass es, bezogen auf dessen Gesamtmenge, bis zu 35 Gew.-% einer Säure enthält, die einen $pK_s$-Wert von nicht mehr als 5 aufweist.

3. Verfahren zum Nachweis von Peroxiden sowohl in wässeriger als auch in organischer Lösung, wobei die auf Peroxide zu prüfende Probe mit einem Reagenz auf Basis von Ti-(IV)-Verbindungen versetzt und die bei Anwesenheit von Peroxiden auftretende Färbung zur qualitativen bzw. quantitativen Bestimmung herangezogen wird, dadurch gekennzeichnet, dass man die Probe mit einem Reagenz versetzt, das neben einem niederen aliphatischen Alkohol mit 1–5 C-Atomen eine Verbindung $TiX_4$ enthält, in der X = Cl oder OR mit R = Alkyl mit 1–5 C-Atomen ist, wobei das Reagenz mit der Probe zu einer homogenen Phase mischbar ist.

4. Verfahren nach Anspruch 3, dadurch gekennzeichnet, dass man dem Reagenz, bezogen auf dessen Gesamtmenge, bis zu 35 Gew.-% einer Säure zufügt, die einen $pK_s$-Wert von nicht mehr als 5 aufweist.

5. Verwendung eines Reagenzes nach den Ansprüchen 1 und 2 zum Nachweis von Peroxiden sowohl in wässeriger als auch in organischer Lösung.

**Claims**

1. Reagent based on Ti(IV) compounds for the determination of peroxides both in aqueous and in organic solutions, characterised in that, in addition to a lower aliphatic alcohol having 1–5 C atoms, it contains a compound $TiX_4$ in which X is Cl or OR, with R being alkyl having 1–5 C atoms, the reagent being miscible with the sample solution to produce a homogeneous phase.

2. Reagent according to Claim 1, characterised in that it contains up to 35% by weight, relative to its total amount, of an acid which has a $pK_a$ value not exceeding 5.

3. Procedure for the determination of peroxides both in aqueous and in organic solutions, in which a reagent based on Ti(IV) compounds is added to the sample to be tested for peroxides, and the colour appearing in the presence of peroxides being employed for qualitative or quantitative determination, characterised in that a reagent is added to the sample, which reagent, in addition to a lower aliphatic alcohol having 1–5 C atoms, contains a compound $TiX_4$ in which X is Cl or OR, with R being alkyl having 1–5 C atoms, the reagent being miscible with the sample to produce a homogeneous phase.

4. Procedure according to Claim 3, characterised in that the reagent includes up to 35% by weight, relative to its total amount, of an acid which has a $pK_a$ value not exceeding 5.

5. Use of a reagent according to Claims 1 and 2 for the determination of peroxides both in aqueous and in organic solutions.

**Revendications**

1. Réactif à base de composés de Ti-(IV) pour la caractérisation de peroxydes en solution aussi bien aqueuse qu'organique, caractérisé en ce que, à côté d'un alcool aliphatique inférieur avec 1–5 atomes de carbone, il contient un composé $TiX_4$, dans lequel X est Cl ou OR avec R = alkyle avec 1–5 atomes de carbone, le réactif étant miscible avec la solution d'essai en une phase homogène.

2. Réactif selon la revendication 1, caractérisé en ce que, rapportés à sa quantité totale, il contient jusqu'à 35% en poids d'un acide qui présente une valeur de $pK_s$ de pas plus de 5.

3. Procédé pour la caractérisation de peroxydes en solution aussi bien aqueuse qu'organique, dans lequel l'échantillon devant être testé pour y rechercher des peroxydes est additionné d'un réactif à base de composés de Ti-(IV) et la coloration se développant en présence de peroxydes est utilisée pour la détermination qualitative et le cas échéant quantitative, caractérisé en ce qu'on ajoute à l'échantillon un réactif qui, à côté d'un alcool aliphatique inférieur avec 1–5 atomes de carbone, contient un composé $TiX_4$, dans lequel X est Cl ou OR avec R = alkyle avec 1–5 atomes de carbone, le réactif étant miscible avec l'échantillon en une phase homogène.

4. Procédé selon la revendication 3, caractérisé en ce qu'on ajoute au réactif, rapportés à sa quantité totale, jusqu'à 35% en poids d'un acide qui présente une valeur de $pK_s$ de pas plus de 5.

5. Utilisation d'un réactif selon les revendications 1 et 2 pour la caractérisation de peroxydes en solution aussi bien aqueuse qu'organique.